(19) Europäisches Patentamt
European Patent Office
Office européen des brevets

(11) **EP 1 072 080 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(21) Anmeldenummer: **99962035.4**

(22) Anmeldetag: **26.10.1999**

(51) Int Cl.:
***H02J 7/14*** *(2006.01)*        ***H02P 9/30*** *(2006.01)*

(86) Internationale Anmeldenummer:
**PCT/DE1999/003408**

(87) Internationale Veröffentlichungsnummer:
**WO 2000/045497 (03.08.2000 Gazette 2000/31)**

(54) **VORRICHTUNG UND VERFAHREN ZUR REGELUNG EINES GENERATORS MIT ZUGEORDNETEM SPANNUNGSWANDLER**

DEVICE FOR REGULATING A GENERATOR WITH A DEDICATED VOLTAGE TRANSFORMER

DISPOSITIF ET PROCEDE DE REGULATION D'UN GENERATEUR AUQUEL EST ASSOCIE UN TRANSFORMATEUR DE TENSION

(84) Benannte Vertragsstaaten:
**DE ES FR GB IT**

(30) Priorität: **29.01.1999 DE 19903426**

(43) Veröffentlichungstag der Anmeldung:
**31.01.2001 Patentblatt 2001/05**

(73) Patentinhaber: **ROBERT BOSCH GMBH**
**70442 Stuttgart (DE)**

(72) Erfinder: **REUTLINGER, Kurt**
**D-70174 Stuttgart (DE)**

(56) Entgegenhaltungen:
**EP-A- 0 401 758        WO-A-99/06241**
**WO-A-99/07056        DE-A- 19 845 569**

**Beschreibung**

Stand der Technik

In Kraftfahrzeugen werden für die Versorgung der elektrischen Bordnetzverbraucher Drehstromgeneratoren eingesetzt, die von der Brennkraftmaschine angetrieben werden. Diese Drehstromgeneratoren, beispielsweise Klauenpolgeneratoren, sind über eine Diodengleichrichterbrücke mit dem Gleichspannungsbordnetz des Fahrzeugs verbunden. Die Spannungshöhe, auf die der Generator geregelt wird, ist derzeit üblicherweise etwa 14 Volt. Die Leistungsabgabe der Drehstromgeneratoren wird über die Größe des Erregerstromes, der durch die Erregerwicklung fließt, geregelt. Als Regelgröße wird dabei üblicherweise die Bordnetzspannung bzw. die Ausgangsspannung des Generators verwendet.

Da die im Fahrzeugbordnetz benötigte elektrische Verbraucherleistung beträchtlich ist und in Zukunft noch weiter ansteigen wird, ist es derzeit bereits üblich, ein Fahrzeugbordnetz als Zeispannungsbordnetz aufzubauen, wobei eine Spannung dann etwa 14 Volt beträgt und die andere etwa 42 Volt. Die Bereitstellung der höheren Spannung erfolgt dabei mit Hilfe eines dem Generator maßgeschalteten Gleichspannungswandlers, der als Hochsetzsteller arbeitet. Ein Fahrzeugbordnetz mit wenigstens einem Generator und einem nachfolgenden Gleichspannungswandler ist bspw. aus der DE-OS 196 459 44 bekannt. Die Regelung des Generators sowie die Ansteuerung des Gleichspannugswandlers erfolgt bei diesem bekannten Bordnetz mit Hilfe eines eigenen Steuergerätes, daß die zugeführten Informationen verarbeitet und entsprechende Ansteuerimpulse abgibt.

Ein weiteres Fahrzeugbordnetz mit einem Generator mit nachgeschaltetem Hochsetzsteller ist aus der DE-P 198 455 69 bekannt. In diesem Bordnetz wird ein Klauenpolgenerator eingesetzt, der zur Speisung des Bordnetzes mit 42 Volt eingesetzt wird. Die Generatorklemmen sind dabei über einen Drehstrombrückengleichrichter mit einem Zwischenkreis verbunden. Diesem nachgeschaltet ist ein Hochsetzsteller zur Leistungssteigerung des Generators. Der Leistusngsteil besteht im wesentlichen aus dem Generator. Die Ausgangsseite des Generators speist über einen Drehstrombrückengleichrichter einen Zwischenkreis. Dieser Zwischenkreis ist mit dem Bordnetz über den Hochsetzsteller verbunden. Der Hochsetzsteller besitzt dabei keine eigene Speicherdrossel, sondern verwendet als Drossel die Stranginduktivität des Generators. Somit kommt dieser Hochsetzsteller mit einem Minimum an Bauteilen aus. Ausgehend von der vorstehend beschriebenen Generatorkonfiguration über ein Fahrzeugbordnetz besteht die Aufgabe der Erfindung darin, eine optimale Regelung des Generators durchzuführen, die auch bei geringen Drehzahlen eine möglichst hohe Leistungsabgabe des Generators ermöglicht.

Aus der älteren Druckschrift WO 99/07056 sind Generatoren sowie zugehörige Regelverfahren bekannt, bei denen der Generator in einem bestimmten Drehzahlbereich ungeregelt betrieben wird, während in einem anderen Drehzahlbereich die Generatorspannung auf einen vorgebbaren Wert geregelt wird. Bei ungeregeltem Betrieb wir die vom Generator abgegebene Spannung mittels eines Gleichspannungswandlers auf vorgebbare Wert gewandelt.

Vorteile der Erfindung

Die erfindungsgemäße Vorrichtung und das erfindungsgemäße Verfahren zur Regelung eines Generators mit zugeordnetem Spannungswandler hat den Vorteil, daß eine Leistungsabgabe des Generators auch bei Drehzahlen, bei denen die Ausgangsspannung des Gerators noch nicht ausreichen würde um direkt in das Bordnetz einzuspeisen, möglich ist. Weiterhin ist vorteilhaft, daß bei Drehzahlen, die höhere Ausgangsspannungen des Generators bewirken, eine Regelung durchführbar ist, die es ermöglicht, daß eine maximale Leistungsabgabe erfolgt.

Erzielt werden diese Vorteile durch ein Verfahren und eine Vorrichtung zur Regelung eines Generators mit zugeordnetem Spannungswandler mit den Merkmalen der Anspruche 1 und 5. Vorteilhafterweise wird durch den als Hochsetzsteller arbeitenden Spannungswandler die Generatorspannung zwischen Null und dem gewünschten Maximalwert von bspw. 42 Volt frei eingestellt, entsprechend dem erforderlichen Wert. Durch diese Spannungseinstellung ist es möglich, den Generator auch im unteren Drehzahlbereich in einem Punkt maximaler Leistungsabgabe zu betreiben. Diese maximale Leistung, die auch Tangentenleistung genannt wird, ist bei gegebenem Generator und maximaler Erregung nur eine Funktion der Drehzahl. Bei höheren Drehzahlen kann der Hochsetzsteller nicht mehr zur Leistungssteigerung verwendet werden, der Generator wird dann vorteilhafterweise über den Erregerstrom in seiner Abgabeleistung geregelt. Bei höheren Drehzahlen erfolgt also vorteilhafterweise dieselbe Regelstrategie für den Generator wie sie bei heutigen Generatoren bereits üblich ist.

Zum Schutz gegen Überspannungen wird in vorteilhafter Weise der Hochsetzsteller selbst verwendet. Durch Schließen des Schalters bzw. der Schalter des Hochsetzstellers bei Überspannungen kann die Leistungsabgabe des Generators an das Netz in vorteilhafter Weise unterbunden werden. Somit lassen sich die Überspannungen und insbesondere die Dauer der Überspannungen nach einem Lastabwurf reduzieren. Die heute üblichen Zener-Dioden in der Gleichrichterbrücke können dann durch herkömmliche Dioden ersetzt werden. Dies ist besonders vorteilhaft, da bei den höheren Spannungen von bis zu 42 Volt, für die der Generator ausgelegt ist, derzeit keine geeigneten Zener-Dioden zur Verfügung stehen.

Zeichnung

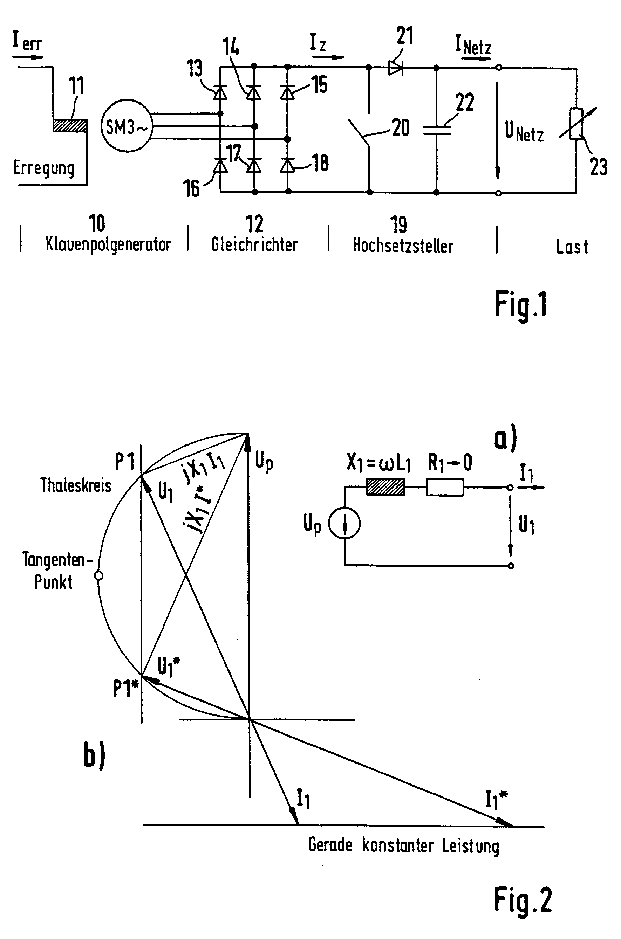

Ausführungsbeispiele der Erfindung sind in den 5 Figuren der Zeichnung dargestellt und werden in der nachfolgenden Beschreibung näher erläutert. Im einzelnen zeigt Figur 1 einen Klauenpolgenerator mit Hochsetzsteller,

Figur 2 ein Ersatzschaltbild und Zeigerdiagramm der vereinfachten Maschine (Generator)

In Figur 3 ist ein Strukturbild des gesamten Regelkreises dargestellt und

Figur 4 zeigt einen Regler für den Hochsetzsteller.

In Figur 5 ist der Überspannungsschutz mit Hilfe des Hochsetzstellers schematisch dargestellt.

Beschreibung

In Figur 1 ist ein Klauenpolgenerator mit Hochsetzsteller dargestellt, für den die erfindungsgemäße Regelung eingesetzt werden kann. Im einzelnen bezeichnet 10 den Klauenpolgenerator, mit der Erregerwicklung 11, durch die der Erregerstrom $I_{Err}$ fließt. Die Ständerwicklungen sowie der üblicherweise mit dem Generator in Verbindung stehende Spannungsregler sind nicht explizit dargestellt.

An den Klauenpolgenerator 10 schließt sich die Gleichrichterbrücke 12 an, die sechs Dioden 13 bis 18 umfaßt. Der Hochsetzsteller 19 umfaßt einen Schalter 20, eine Diode 21 und einen Kondensator 22. Das Bordnetz ist schematisch als Last 23 dargestellt. Aus dem Gleichrichter fließt der Strom $I_z$ und ins Fahrzeugbordnetz fließt der Strom $I_N$. Die für das Netz bereitgestellte Spannung ist mit $U_N$ bezeichnet.

Detaillierte Beschreibung

1. Generator

Bei Vernachlässigung der magnetischen Einachsigkeit ergibt sich wie in Figur 2a und 2b dargestellt ist, ein sehr übersichtliches Ersatzschaltbild und ein einfaches Zeigerdiagramm. Zu einer Abgabeleistung P der Maschine existieren zwei mögliche Betriebspunkte. Im Zeigerdiagramm der Maschine sind die zu einer bestimmten Leistung P gehörenden zwei möglichen Betriebspunkte dargestellt. Das Produkt aus Strom x Spannung ist in beiden Fällen gleich. Der eine Betriebspunkt P1 zeichnet sich durch eine große Spannung und einen kleinen Strom aus, der andere Betriebspunkt P1* dagegen durch kleine Spannung und großen Strom.

Für den Fall maximaler Leistungsabgabe der Maschine fallen beide Betriebspunkte im sogenannten **Tangentenpunkt** zusammen. Für $X_1 >> R_1$ gilt

$$U_1 = \frac{1}{\sqrt{2}} \cdot U_p.$$

Der Spannungsabfall an der Stranginduktivität $X_1 = \omega L_1$ ist dabei gleich groß wie die Klemmenspannung $U_1$.

Somit ist der Strom im Tangentenpunkt

$$I_1 = \frac{1}{\sqrt{2}} \cdot U_p / \omega L_1.$$ Dieser Strom ist mit UP

$$UP = \frac{1}{\sqrt{2}} \cdot \omega L_{1,f}.$$

$I_{err}$ gleich $I_1 = \frac{1}{2} \cdot L_{1f} / L_1 \cdot I_{err}.$

Daraus sieht man, daß der Strom für eine maximale Leistungsabgabe unabhängig von der Drehzahl ist. Er ist nur eine Funktion vom Erregerstrom. Daher kann der Strom für maximale Leistungsabgabe als Funktion vom Erregerstrom, unabhängig von der Drehzahl, vorgegeben werden und eignet sich zur Regelung auf die Tangentenleistung.

2. Hochsetzsteller

Um die maximale Leistung der Maschine bei verschiedenen Drehzahlen abnehmen zu können muß die Klemmenspannung einstellbar sein. Diese ist jedoch abhängig von der Polradspannung der Maschine, die wiederum von der Drehzahl und dem Erregerstrom abhängt. Somit muß die Klemmenspannung variabel gestaltet werden. Dies erfolgt durch den Hochsetzsteller. Über das Tastverhältnis V des Hochsetzstellers wird das Verhältnis der Spannungen am Stellereingang $U_z$ und Stellerausgang $U_{Netz}$ (Netzspannung) festgelegt. Die Zwischenkreisspannung $U_z$ ist die Ausgangsspannung des Generators nach der Gleichrichtung. Am Stellerausgang liegt die Netzspannung $U_{Netz}$, an der der Verbraucher und gegebenenfalls eine Batterie hängt. Dabei ist die Ausgangsspannung eines Hochsetzstellers immer größer oder gleich der Eingangsspannung. Am Stellerausgang soll eine konstante Spannung von 42 Volt existieren, somit kann die Eingangsspannung des Stellers, bzw. die Generatorspannung, durch das Tastverhältnis zwischen $U_z = 0$ und 42 Volt eingestellt werden.

3. Regelung

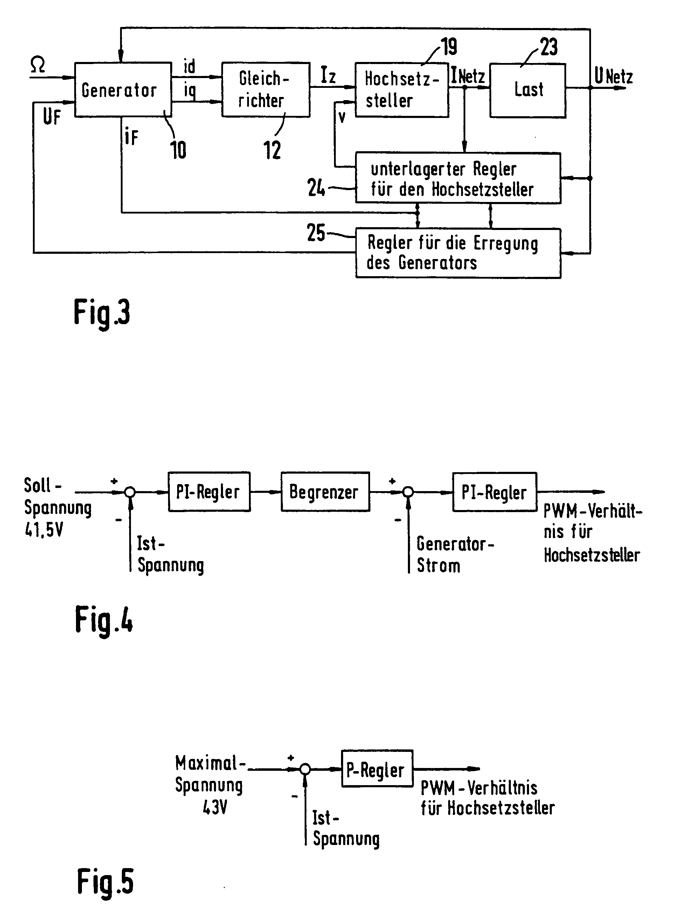

Die Maschine bietet für eine Regelung zwei Eingriffsmöglichkeiten. Zu einen kann der Erregerstrom der Maschine und somit die Polradspannung verändert werden, zum anderern kann die Klemmenspannung, bzw. die Zwischenkreisspannung über den Hochsetzsteller variiert werden. Von beiden Möglichkeiten soll Gebrauch gemacht werden. In Figur 3 ist das Strukturbild des gesamten Regelkreises dargestellt, mit dem unterlagerten Regler für den Hochsetzsteller 24 und dem Regler für die Erregung des Generators 25. Der Generator 10, der Gleichrichter 12, der Hochsetzsteller 19 und die Last 23 tauschen untereinander die in Figur 3 eingetragenen Informationen aus.

Leistungsregelung im unteren Drehzahlbereich:

Im unteren Drehzahlbereich ist die Maschine voll erregt, es fließt der maximal zulässige Erregerstrom. Die Zwischenkreisspannung ist jedoch kleiner als die Netzspannung. Durch den Hochsetzsteller kann nun die Leistung der Maschine auf den gewünschten Abgabewert eingestellt werden. Die Abgabeleistung wird über das Tastverhältnis geregelt. Dabei erreicht sie maximal die Tangentenleistung.

Spannungsregelung bei höheren Drehzahlen (Load-Dump-Schutz)

Von der Möglichkeit, daß zu jeder Leistung zwei mögliche Klemmenspannungen existieren, kann im oberen Drehzahlbereich Gebrauch gemacht werden. Ist die Maschine für eine große Leistung erregt und es findet ein Lastabwurf statt, so steigt sprunghaft die Klemmenspannung an. Dieser Anstieg der Netzspannung kann nicht durch eine rasche Reduzierung des Erregerstromes abgefangen werden, da dieser wegen der Erregerinduktivität nur langsam abnimmt. Jedoch kann der

Hochsetzsteller den Spannungswert einstellen, der zu der neuen, geringeren Leistung gehört. Dies bedeutet, daß mit dem Hochsetzsteller die Klemmenspannung am Generator von der zuvor existierenden natürlichen Klemmenspannung ($U_z = U_{Netz}$) verringert wird. Die Klemmenspannung erreicht den Wert, bei dem mit noch unverändertem Erregerstrom die Leistungsabgabe an das Netz den neuen Wert erreicht.

Regelungskonzept

Der Regler umfaßt drei mögliche Eingriffsbereiche. Daher ist es sinnvoll den Regler in drei Teilregler zu gliedern:

1. $U$ ist < $U_{soll}$ - $\Delta U_{min}$: Der Hochsetzsteller versucht die Spannung zu stützen. Gleichzeitig wird der Erregerstrom gesteigert. Dieser Betrieb wird fortgesetzt bis die Spannung ihren Sollwert, oder der Erregerstrom seinen zulässigen Maximalwert erreicht hat. Kann der Erregerstrom nicht mehr gesteigert werden, da er den maximal zulässigen Wert erreicht hat, kann die geforderte Leistung über den Hochsetzsteller bereitgestellt werden.

2. $U_{soll}$ - $\Delta U_{min}$ < $U_{ist}$ < $U_{soll}$ + $\Delta U_{max}$: Der Generator befindet sich in seinem normalen Betriebsbereich. Er wird (wie dies auch in den heutigen Reglern realisiert ist) über den Erregerstrom in seiner Ausgangsspannung, bzw. seiner Abgabeleistung, geregelt.

3. $U_{ist}$ > $U_{soll}$ + $\Delta U_{max}$: Überspannung, z.B. nach einem Lastabwurf. Da der Erregerstrom nicht rasch genug reduziert werden kann, muß über den Steller die Maschine "abgetaktet" werden. Gleichzeitig erfolgt eine Reduzierung des Erregerstromes (Load-Dump-Schutz).

Regelung des Hochsetzstellers

Der Spannungsregelung ist ein Stromregler für den Generator Strom $I_z$ unterlagert. Gleichzeitig wird dieser beschränkt auf den Stromwert im Tangentenpunkt. Die Begrenzung des Generatorstromes auf einen maximalen Wert ist abhängig von dem momentanen Wert des Erregerstromes. Daher ist es erforderlich, den Grenzwert für den Generatorstrom aus dem Erregerstrom abzuleiten. Hierzu muß dem Begrenzer der aktuelle Istwert des Erregerstromes zugeführt werden. In Figur 4 ist ein Beispiel für einen Regler für den Hochsetzsteller angegeben.

Überspannungsschutz

Der Überspannungsschutz soll möglichst rasch eingreifen um Überspannungsspitzen zu unterdrücken. Die Anstiegsgeschwindigkeit der Ausgangsspannung wird durch die Höhe des Lastabfalles, bzw. des Stromes, und der Ausgangskapazität bestimmt. Um auf Überspannungen schnell reagieren zu können, ist hierzu ein einfacher P-Regler vorgesehen. Dieser Regler spricht an, sobald die Netzspannung einen bestimmten Maximalwert überschreitet. Spricht dieser Regler an, so wird über den Hochsetzsteller die Netzspannung auf diesen Wert geregelt. Somit kann die Abgabeleistung des Generators an das Netz reduziert werden. Eine mögliche Ausgestaltung für den Überspannungsschutz ist in Figur 5 angegeben.

Wesentliche Punkte

Für eine maximale Leistungsabgabe (Tangentenlinie) wird auf den Abgabestrom der Maschine geregelt.

Für andere Leistungen wird das Tastverhältnis reduziert, bis die gewünschte Leistung sich einstellt. Der Erregerstrom wird hierbei auf seinen maximalen Wert geregelt. Dadurch wird der Ständerstrom der Maschine möglichst gering, und der Wirkungsgrad erreicht seinen günstigsten Wert.

Bei Überspannungen im Netz wird die Maschine über den Schalter kurzgeschlossen und die Leistungsabgabe des Generators unterbrochen. Dadurch ergibt sich ein Load-Dump-Schutz. Auch hierbei kann auf eine bestimmte vorgebbare Leistungsabgabe des Generators geregelt werden.

**Patentansprüche**

1. Verfahren zur Regelung eines Generators (10) mit zugeordnetem Spannungswandler (19) der als Hochsetzsteller arbeitet, wobei die Regelung in wenigstens zwei Teilbereichen, die als Drehzahlbereiche oder als Spannungsbereiche definiert sind, auf unterschiedlche Weise erfolgt und wenigstens zwei unterschiedliche Regeleinrichtungen (24,25) vorhanden sind, wobei die erste Regeleinrichtung (24) für die Regelung des als Hochsetzstellers arbeitenden Spannungswandlers (19) und die zweite Regeleinrichtung (25) als Regler für den durch die Erregerwicklung des Generators fließenden Erregerstrom dient, wobei beide Regeleinrichtungen miteinander in Verbindung stehen und Informationen austauschen, wobei ein dritter Regelbereich festgelegt wird, in dem die Regelung gegenüber den beiden ersten Bereichen auf unterschiedliche Weise erfolgt, wobei Mittel zum Überspannungsschutz vorhanden sind, die auf den Spannungswandler einwirken und bei erkannter Überspannung unabhängig von weiteren Bedingungen auf die dritte Regelvariante umschalten.

**2.** Verfahren zur Regelung eines Generators (10) mit zugeordneten Spannungswandler (19) nach Anspruch 1, **dadurch gekennzeichnet, dass** durch Regelung des Erregerstromes die Polradspannung des Generators in vorgebbarer Weise beeinflusst wird und die Klemmenspannung des Generators über den Hochsetzsteller in vorgebbarer Weise variiert wird.

**3.** Verfahren zur Regelung eines Generators (10) mit zugeordneten Spannungswandler (19) nach einem der vorhergehenden Ansprüche, **dadurch gekennzeichnet, dass** die Regelung so erfolgt, dass unabhängig von der Drehzahl des Generators die Klemmenspannung am Ausgang des Generators etwa 14 Volt und die Ausgangsspannung am Hochsetzsteller etwa 42 Volt beträgt.

**4.** Verfahren zur Regelung eines Generators (10) mit zugeordneten Spannungswandler (19) nach einem der vorhergehenden Ansprüche, **dadurch gekennzeichnet, dass** die Einstellung der Klemmenspannung über das Tastverhältnis des Hochsetzstellers erfolgt, das das Spannungsverhältnis am Eingang und am Ausgang des Hochsetzstellers festlegt.

**5.** Vorrichtung zur Regelung eines Generators (10) mit zugeordnetem Spannungswandler (19), der als Hochsetzsteller arbeitet wobei wenigstens zwei unterschiedliche Regeleinrichtungen (24, 25) vorhanden sind, wobei die erste Regeleinrichtung (24) für die Regelung des als Hochsetzstellers arbeitenden Spannungswandlers (19) und die zweite Regeleinrichtung (25) als Regler für den durch die Erregerwicklung des Generators (10) fließenden Erregerstrom dient.
wobei sie nach wenigstens einem Verfahren nach den Ansprüchen 1 bis 4 arbeitet.

**Claims**

**1.** Method for regulating a generator (10) having an associated voltage converter (19) which operates as a step-up controller, with the regulation being performed in a different way in at least two sub-ranges which are defined as rotation speed ranges or as voltage ranges, and at least two different regulating devices (24, 25) being present, with the first regulating device (24) serving to regulate the voltage converter (19), which operates as a step-up controller, and the second regulating device (25) serving as a regulator for the field current flowing through the field winding of the generator, with the two regulating devices being connected to one another and interchanging information, with a third regulating range being defined, in which the regulation is performed in a different way to the two first ranges, with overvoltage-prevention means being present, which overvoltage-prevention means act on the voltage converter and, when an overvoltage is identified, change over to the third regulating variant irrespective of further conditions.

**2.** Method for regulating a generator (10) having an associated voltage converter (19) according to Claim 1, **characterized in that** the synchronous generated voltage of the generator is influenced in a predefinable manner by regulating the field current, and the terminal voltage of the generator is varied in a predefinable manner by means of the step-up controller.

**3.** Method for regulating a generator (10) having an associated voltage converter (19) according to one of the preceding claims, **characterized in that** the regulation is performed such that, independently of the rotation speed of the generator, the terminal voltage at the output of the generator is approximately 14 volts and the output voltage at the step-up controller is approximately 42 volts.

**4.** Method for regulating a generator (10) having an associated voltage converter (19) according to one of the preceding claims, **characterized in that** the terminal voltage is set by means of the pulse duty factor of the step-up controller, which pulse duty factor defines the voltage ratio at the input and at the output of the step-up controller.

**5.** Apparatus for regulating a generator (10) having an associated voltage converter (19) which operates as a step-up converter, with at least two different regulating devices (24, 25) being present, with the first regulating device (24) serving to regulate the voltage converter (19), which operates as a step-up controller, and the second regulating device (25) serving as a regulator for the field current flowing through the field winding of the generator (10), with the said apparatus operating according to at least one method according to Claims 1 to 4.

## Revendications

1. Procédé de régulation d'un générateur (10) auquel est associé un convertisseur de tension (19) qui travaille en releveur de tension,
la régulation s'effectuant de manières différentes dans au moins deux plages partielles qui sont définies comme plages de vitesse de rotation ou comme plages de tension et au moins deux dispositifs différents de régulation (24, 25) étant prévus,
le premier dispositif de régulation (24) servant à la régulation du convertisseur de tension (19) qui travaille en releveur de tension et le deuxième dispositif de régulation (25) servant de régulateur du courant d'excitation qui traverse le bobinage d'excitation du générateur,
les deux dispositifs de régulation étant reliés l'un à l'autre et échangeant des informations,
une troisième plage de régulation étant définie dans laquelle la régulation s'effectue de manière différente de celle des deux premières plages, des moyens de protection contre les surtensions étant prévus pour agir sur le convertisseur de tension et, en cas de détection d'une surtension, commutant sur la troisième variante de régulation indépendamment des autres conditions.

2. Procédé selon la revendication 1, pour la régulation d'un générateur (10) auquel est associé un convertisseur de tension (19), **caractérisé en ce que** la régulation du courant d'excitation agit de manière prédéterminée sur la tension de la roue polaire du générateur et **en ce que** la tension aux bornes du générateur est modifiée de manière prédéterminée par le releveur de tension.

3. Procédé selon l'une des revendications précédentes, pour la régulation d'un générateur (10) auquel est associé un convertisseur de tension (19), **caractérisé en ce que** la régulation s'effectue de telle sorte qu'indépendamment de la vitesse de rotation du générateur, la tension aux bornes à la sortie du générateur est d'environ 14 volts et la tension de sortie du releveur de tension d'environ 42 volts.

4. Procédé selon l'une des revendications précédentes, pour la régulation d'un générateur (10) auquel est associé un convertisseur de tension (19), **caractérisé en ce que** le réglage de la tension aux bornes s'effectue par l'intermédiaire du rapport d'échantillonnage du releveur de tension qui définit le rapport de tension entre l'entrée et la sortie du releveur de tension.

5. Dispositif de régulation d'un générateur (10) auquel est raccordé un convertisseur de tension (19) qui travaille en releveur de tension, au moins deux dispositifs de régulation (24, 25) différents étant prévus, le premier dispositif de régulation (24) servant à la régulation du convertisseur de tension (19) qui travaille en releveur de tension et le deuxième dispositif de régulation (25) servant de régulateur du courant d'excitation qui traverse le bobinage d'excitation du générateur (10), le dispositif travaillant dans un procédé selon au moins l'une des revendications 1 à 4.

**Fig.1**

**Fig.2**

**Fig.3**

**Fig.4**

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS19645944 A
- DE P19845569
- WO 9907056 A